(19) **Europäisches Patentamt / European Patent Office / Office européen des brevets**

(11) **EP 2 719 070 B1**

(12) **FASCICULE DE BREVET EUROPEEN**

(45) Date de publication et mention de la délivrance du brevet:
**12.08.2015 Bulletin 2015/33**

(21) Numéro de dépôt: **12725064.5**

(22) Date de dépôt: **27.04.2012**

(51) Int Cl.:
*H02P 9/08* (2006.01)     *H02P 9/00* (2006.01)
*H02P 9/10* (2006.01)     *H02P 9/48* (2006.01)

(86) Numéro de dépôt international:
**PCT/FR2012/050941**

(87) Numéro de publication internationale:
**WO 2012/168605 (13.12.2012 Gazette 2012/50)**

(54) **PROCEDE DE CONTROLE D'UN COUPLE RESISTANT D'UN ALTERNATEUR DE VEHICULE AUTOMOBILE, ET SYSTEME DE MISE EN OEUVRE DE CE PROCEDE**

VERFAHREN ZUR STEUERUNG DES WIDERSTÄNDIGEN DREHMOMENTS EINES KRAFTFAHRZEUGGENERATORS UND SYSTEM ZUR DURCHFÜHRUNG DIESES VERFAHRENS

METHOD FOR CONTROLLING THE RESISTING TORQUE OF A MOTOR VEHICLE ALTERNATOR, AND SYSTEM FOR IMPLEMENTING THIS METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.06.2011 FR 1154976**

(43) Date de publication de la demande:
**16.04.2014 Bulletin 2014/16**

(73) Titulaire: **Valeo Equipements Electriques Moteur 94046 Créteil Cedex (FR)**

(72) Inventeurs:
• **CHASSARD, Pierre**
  **F-94000 Creteil (FR)**
• **TISSERAND, Pierre**
  **F-94450 Limeil-brevannes (FR)**
• **LABISTE, Laurent**
  **F-94100 Saint Maur Des Fosses (FR)**

(56) Documents cités:
**DE-A1-102004 020 730     DE-A1-102006 003 425
DE-A1-102006 019 625     US-A1- 2007 085 512**

**Description**

**DOMAINE TECHNIQUE DE L'INVENTION.**

La présente invention concerne un procédé de contrôle d'un couple résistant d'un alternateur destiné à être accouplé à un moteur thermique de véhicule automobile. L'invention concerne également un système de contrôle de ce couple résistant mettant en oeuvre ce procédé, ainsi que l'alternateur comprenant ce système.

**ARRIERE PLAN TECHNOLOGIQUE DE L'INVENTION.**

Dans le domaine de l'automobile, il est bien connu de maintenir la tension fournie au réseau électrique de bord par l'alternateur du véhicule à une valeur de consigne prédéterminée, indépendamment de la vitesse de rotation du moteur ou de la consommation électrique des équipements, au moyen d'un dispositif de régulation dit « régulateur ».

De nos jours, les équipementiers de l'automobile ont développé des alternateurs très performants en mettant en oeuvre des systèmes électroniques de puissance contrôlés par des circuits faisant appel à des techniques numériques, reposant notamment sur l'utilisation de logique câblée, microprocesseurs ou microcontrôleurs.

A la différence des régulateurs à bilames d'autrefois, qui fonctionnaient autour d'une tension de régulation fixe indépendamment du mode de fonctionnement du véhicule, les dispositifs de régulation électroniques modernes mettent à profit les capacités de traitement de signal de l'électronique pour recevoir des valeurs de consigne variables transmises par une unité de contrôle du moteur dans le but d'optimiser la charge de la batterie et la production d'électricité nécessaire aux équipements électroniques en fonction du couple.

On conçoit que l'alternateur ne devrait pas prélever de couple au démarrage du moteur, voire au cours d'une accélération pour améliorer les performances des véhicules de petites cylindrées, ou que le couple prélevé puisse être plus réduit parce que la batterie est déjà chargée.

Il est connu de limiter le couple résistant prélevé par un alternateur par une fonction de charge progressive dite "LRC" (acronyme de la dénomination anglaise "Load Response Control").

La fonction LRC prévient notamment le calage du moteur thermique quand celui-ci fonctionne au ralenti ou à froid, au démarrage du véhicule, et que des charges électriques importantes sont connectées sur le réseau électrique de bord.

Sans la fonction LRC, la connexion de ces charges provoquerait une augmentation par le régulateur de tension du rapport cyclique de type PWM (pour "Pulse Width Modulation" en terminologie anglaise) avec comme conséquence une augmentation d'un courant d'excitation alimentant le rotor de l'alternateur, et par conséquent une augmentation du couple résistant.

La fonction LRC limite généralement ce rapport cyclique en fonction de variables telles que la vitesse de rotation du rotor (c'est-à-dire du moteur thermique), ou de la température, ou du courant d'excitation, ou de la tension d'alimentation.

Par exemple, le procédé de contrôle de charge progressive d'un alternateur de véhicule automobile divulgué dans la demande de brevet européen EP2259421 définit une valeur maximale autorisée du rapport cyclique en fonction d'une vitesse de rotation de l'alternateur.

Les modes de réalisation de la fonction LRC connus de l'état de la technique, qui ne prennent en compte qu'une seule variable de décision, présentent une faiblesse dans certaines situations par exemple lorsqu'on ne veut pas dépasser une valeur de couple.

Par DE102006019625A1, il est connu un contrôleur d'un courant d'excitation appliqué à un rotor d'un alternateur de véhicule automobile limitant un rapport cyclique maximum dépendant d'une vitesse de rotation du rotor et d'une température du rotor.

Par DE102006003425A1, il est connu un contrôleur d'un couple résistant d'un alternateur de véhicule automobile dépendant d'une vitesse de rotation du rotor, d'une tension de sortie et d'un courant de sortie.

**DESCRIPTION GENERALE DE L'INVENTION.**

La présente invention vise par conséquent à pallier cette faiblesse en prenant en compte des combinaisons de ces variables.

Selon un premier aspect, l'invention concerne un procédé de contrôle comme défini dans la revendication indépendante 1.

Selon une caractéristique particulière du procédé, la température est estimée en fonction d'une mesure de température d'un régulateur de la tension, de préférence une température de jonction d'un élément à semi-conducteur de commutation du courant d'excitation.

Selon un second aspect, l'invention concerne un système de contrôle comme défini dans la revendication indépendénte 3.

Selon une caractéristique particulière du système, les moyens de détermination comprennent également un bloc estimateur de couple et un bloc de commande de limitation d'excitation.

Selon d'autres caractéristiques particulières, le bloc estimateur de couple comprend au moins un élément de traitement parmi un second groupe comprenant un amplificateur, un filtre, un multiplieur, une cartographie, un soustracteur, un adaptateur de longueur de mot binaire, et le bloc de commande de limitation d'excitation comporte un gabarit de limitation de rapport cyclique.

Selon encore une autre caractéristique particulière, les moyens de détermination comprennent en outre une mémorisation comprenant des instructions représentatives du procédé décrit ci-dessus.

Selon une autre caractéristique, un alternateur de véhicule automobile comprend un système de contrôle d'un couple résistant présentant les caractéristiques ci-dessus.

Ces quelques spécifications essentielles auront rendu évidents pour l'homme de métier les avantages apportés par le procédé de contrôle d'un couple résistant d'un alternateur de véhicule automobile selon l'invention, ainsi que par le système de contrôle et l'alternateur correspondant, par rapport à l'état de la technique antérieur.

Les spécifications détaillées de l'invention sont données dans la description qui suit en liaison avec les dessins ci-annexés.

**BREVE DESCRIPTION DES DESSINS.**

La **Figure 1a** est un graphe montrant une première limitation de rapport cyclique d'un courant d'excitation en fonction de la vitesse de rotation d'un rotor d'un alternateur connue de l'état de la technique.

La **Figure 1b** est un graphe montrant une deuxième limitation de rapport cyclique en fonction de la température d'un rotor connue de l'état de la technique.

La **Figure 2** est un graphe montrant un rapport cyclique maximum en fonction de la température du rotor et de la vitesse de rotation selon l'invention.

La **Figure 3** montre l'effet sur le couple prélevé de la mise en oeuvre de la limitation du rapport cyclique selon le graphe de la **Figure 2.**

La **Figure 4** est un graphe montrant une troisième limitation de rapport cyclique fonction du courant d'excitation et de la température selon l'invention.

La **Figure 5** montre la variation de la résistance d'un rotor d'un alternateur auquel est destiné l'invention en fonction de la température.

La **Figure 6** montre l'effet sur le couple prélevé de la mise en oeuvre de la limitation du rapport cyclique selon la seconde variante du procédé selon l'invention.

La **Figure 7** est un schéma de principe d'un mode de réalisation préféré d'un système de contrôle d'un couple résistant d'un alternateur de véhicule automobile selon l'invention apte à mettre en oeuvre la seconde variante du procédé.

**DESCRIPTION DES MODES DE REALISATION PREFERES DE L'INVENTION.**

Ainsi que cela a déjà été rappelé en préambule, plusieurs solutions sont connues de l'état de la technique pour limiter le couple résistant C prélevé sur le moteur thermique d'un véhicule automobile par l'alternateur.

Une première solution consiste à établir une première limitation de rapport cyclique SPEED_LIMIT en fonction de la vitesse de rotation V_ROTOR de l'alternateur, qui est estimée à partir d'une période d'un signal de phase.

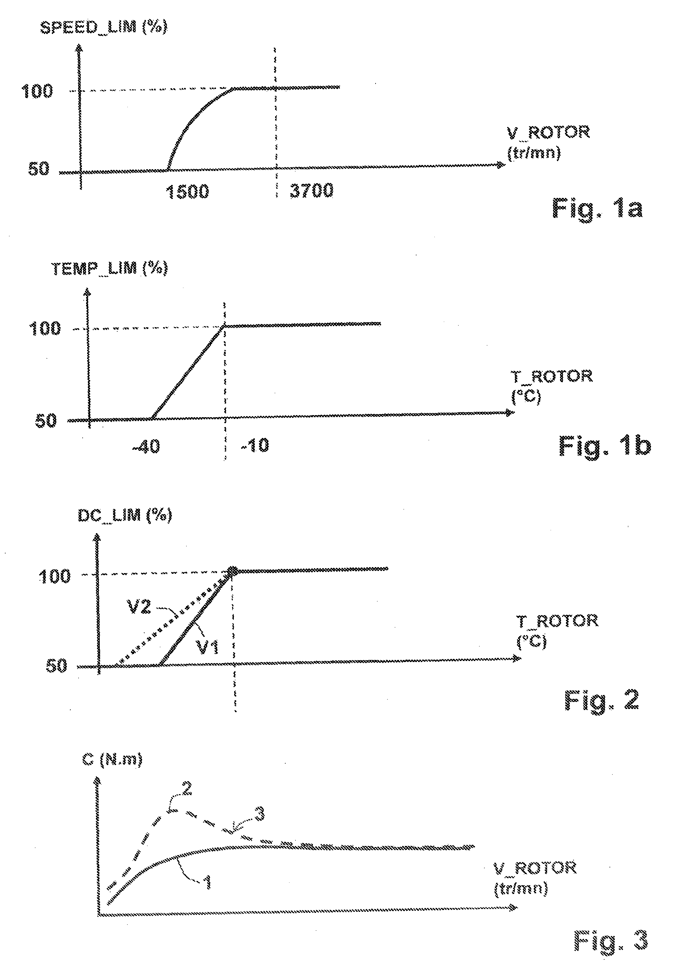

La **Figure 1a** donne un exemple où le rapport cyclique maximum DC_LIMIT est de 50% pour une vitesse de rotation V_ROTOR inférieure à 1500 tr/mn, pour s'établir à 100% vers 3700 tr/mn.

Cette première limitation de rapport cyclique SPEED_LIMIT permet d'éviter le risque de calage au ralenti.

Une deuxième solution connue consiste à établir une deuxième limitation de rapport cyclique TEMP_LIMIT en fonction de la température T_ROTOR du rotor de l'alternateur. La température T_ROTOR peut être une température estimée en fonction d'une mesure de température du régulateur de tension de l'alternateur, de préférence une température de jonction d'un élément à semi-conducteur de commutation MOS du courant d'excitation I_ROTOR de l'alternateur.

La **Figure 1b** donne un exemple où le rapport cyclique maximum DC_LIMIT est de 50% pour une température T_ROTOR inférieure à -40°C, pour s'établir à 100% vers une température T_ROTOR de -10°C.

Cette deuxième limitation de rapport cyclique TEMP_LIMIT permet d'éviter le risque de calage au démarrage par très basses températures.

Mais la mise en oeuvre de l'une ou l'autre de ces solutions présente une faiblesse:

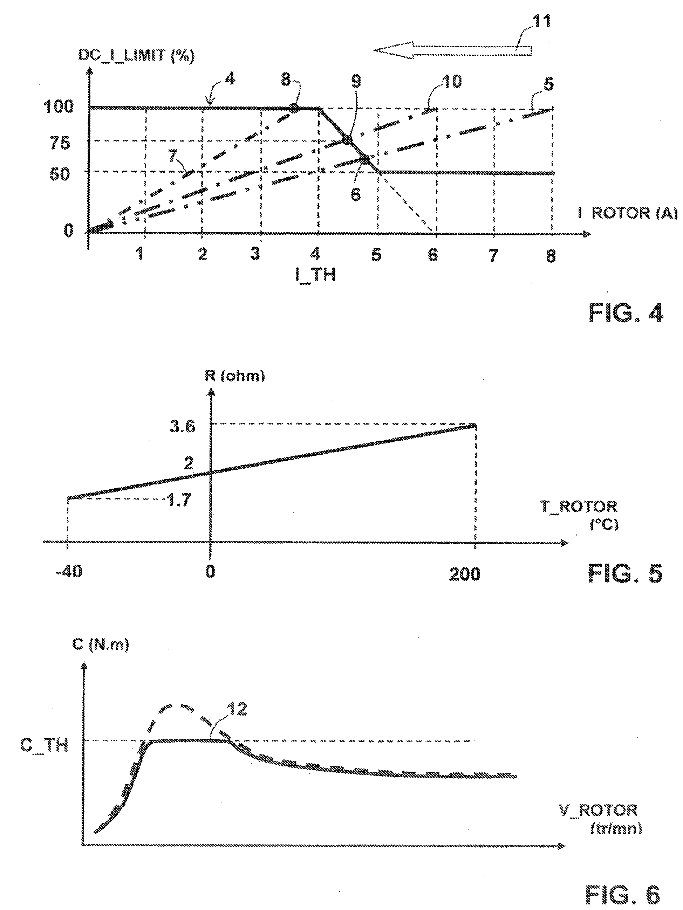

- si la première solution est utilisée seule, le moteur thermique peut être lancé et le rapport cyclique maximum DC_LIMIT être voisin de 100%, selon la courbe de la **Figure 1a**, alors que l'environnement du moteur est encore froid. Dans ce cas la faible résistance du rotor (Voir **Figure 5**) conduit à un courant d'excitation maximum et donc à un couple prélevé C maximum.
- si la deuxième solution est utilisée seule, il n'est pas tenu compte d'un régime de ralenti à partir d'une température T_ROTOR supérieure à -10°C.

Le procédé selon l'invention pallie cette faiblesse en combinant les première et deuxième limitations de rapports cycliques SPEED_LIMIT, TEMP_LIMIT.

Une combinaison simple consiste à prendre le rapport cyclique maximum DC_LIMIT égal à la plus grande des première et deuxième limitations de rapports cycliques SPEED_LIMIT, TEMP_LIMIT:

$$DC\_LIMIT = MAX\ (SPEED\_LIMIT,\ TEMP\_LIMIT)$$

Des mesures effectuées sur un prototype d'alternateur ont permis de constater:

- une limitation efficace du couple résistant C à froid (de -40°C à -20°C) et à basse vitesse V_ROTOR (à environ 2000 tr/mn);
- aucune limitation ni à chaud, ni à haute vitesse.

Une autre combinaison simple consiste à prendre le rapport cyclique maximum DC_LIMIT égal à la moyenne des première et deuxième limitations de rapports cycliques SPEED_LIMIT, TEMP_LIMIT:

$$DC\_LIMIT = MOY\ (SPEED\_LIMIT,\ TEMP\_LIMIT)$$

Des mesures effectuées sur ce même prototype d'alternateur ont permis de constater:

- une limitation efficace du couple résistant C à froid (de -40°C à -20°C) et à basse vitesse (à environ 2000 tr/mn);
- une limitation moyenne à chaud et à basse vitesse;
- aucune limitation à chaud et à haute vitesse.

Une combinaison plus complexe consiste à faire varier la pente de la deuxième limitation de rapport cyclique TEMP_LIMIT en fonction de la température T_ROTOR **(Figure 1b)** inversement proportionnellement à la vitesse de rotation V_ROTOR, comme le montre par exemple la **Figure 2:**

- pour une vitesse V1 de 1500 tr/mn, la pente du rapport cyclique maximum DC_LIMIT est 50/25= 2;
- pour une vitesse V2 de 2000 tr/mn, la pente du rapport cyclique maximum DC_LIMIT est 50/30= 1,7.

Le calcul du rapport cyclique maximum DC_LIMIT est effectué au moyen d'une fonction linéaire de la température T_ROTOR dont la pente est inversement proportionnelle à vitesse de rotation V_ROTOR (a et b sont deux constantes prédéterminées):

$$DC\_LIMIT= (a/V\_ROTOR)\ x\ T\_ROTOR + b$$

Des mesures également effectuées sur le prototype d'alternateur ont permis de constater:

- une limitation efficace du couple résistant C à froid (de -40°C à -20°C) et à basse vitesse (à environ 2000 tr/mn);
- une limitation du couple résistant contrôlée linéairement avec la température T_ROTOR et avec l'inverse de la vitesse de rotation V_ROTOR;
- aucune limitation à chaud et à haute vitesse.

La **Figure 3** montre l'effet de la mise en oeuvre d'une limitation du rapport cyclique: le graphe 1 du couple résistant C en fonction de la vitesse de rotation V_ROTOR ne présente pas de maximum 2 au ralenti dans le cas d'une connexion d'une charge comme en présente le graphe sans fonction de limitation 3.

Dans une première variante du procédé de contrôle d'un couple résistant C d'un alternateur de véhicule automobile selon l'invention, la variable associée à la vitesse de rotation V_ROTOR pour le calcul d'un rapport cyclique maximum DC_LIMIT est le courant d'excitation I_ROTOR circulant dans le rotor. La mesure peut être effectuée par exemple quand l'élément à semi-conducteur de commutation de ce courant est dans un état passant.

Une troisième limitation de rapport cyclique DC_I_LIMIT en fonction du courant d'excitation I_ROTOR est définie par un gabarit 4 prédéterminé comme le montre la **Figure 4.**

Une limitation d'excitation n'intervient qu'à partir d'un seuil de courant I_TH prédéterminé. Le couple résistant C proportionnel au courant d'excitation I_ROTOR est par conséquent limité au-delà de ce seuil I_TH.

Comme le montre la **Figure 5**, à froid, le rotor présente une résistance R faible, par exemple 1,7 ohm à la température T_ROTOR de -40°C.

Le courant d'excitation I_ROTOR varie linéairement (variation qui est représentée par une première droite 5 pour cette température T_ROTOR de -40°C) avec le rapport cyclique, et devient maximum, comme le montre bien la **Figure 4**. Il peut alors atteindre, par exemple, 8 A quand le rapport cyclique est de 100% sans limitation.

Le courant d'excitation est supérieur au seuil de courant I_TH (4A, comme le montre par exemple la **Figure 4**), et la troisième limitation de rapport cyclique DC_I_LIMIT intervient en un premier point de fonctionnement 6 qui est l'intersection du gabarit prédéterminé 4 et de la première droite 5.

Comme le montre la **Figure 5**, à chaud, le rotor présente une résistance R plus élevée, par exemple 3,6 ohm à la température T_ROTOR de 180°C.

Une seconde droite 7, représentative de la variation du courant d'excitation I_ROTOR en fonction d'un rapport cyclique pour cette température T_ROTOR de 180 °C, coupe le gabarit prédéterminé 4 en un second point de fonctionnement 8 en dessous du seuil de courant I_TH, correspondant par exemple à un courant d'excitation de 3,8 A : la troisième limitation de rapport cyclique DC_I_LIMIT n'intervient pas à chaud.

Pour une température courante T_ROTOR intermédiaire, un point de fonctionnement courant 9, correspondant à l'intersection d'une droite courante 10 représentative du courant d'excitation I_ROTOR en fonction d'un rapport cyclique pour cette température courante T_ROTOR, évolue selon l'échauffement 11 du rotor.

La troisième limitation de rapport cyclique DC_I_LIMIT est combinée, selon cette première variante du procédé de l'invention, avec la première limitation de rapport cyclique SPEED_LIMIT en fonction de la vitesse de rotation de l'alternateur (telle que montrée sur la **Figure 1a**) pour déterminer un rapport cyclique maximum DC_LIMIT.

De préférence, ce rapport cyclique maximum DC_LIMIT est égal à la plus grande des première et troisième limitations de rapports cycliques:

$$DC\_LIMIT= MAX \ (SPEED\_LIMIT, DC\_I\_LIMIT)$$

Des mesures effectuées dans cette première variante sur le prototype d'alternateur ont permis de constater:

- une limitation efficace du couple résistant C à fort courant d'excitation et à faible vitesse V;
- une faible limitation du couple résistant C quand le rotor est chaud.

Dans une seconde variante du procédé de contrôle d'un couple résistant C d'un alternateur de véhicule automobile selon l'invention, un rapport cyclique maximum DC_LIMIT est déterminé en fonction d'une vitesse de rotation V_ROTOR du rotor, d'un courant d'excitation I_ROTOR et d'une tension d'alimentation B+:

$$DC\_LIMIT= f(V\_ROTOR, I\_ROTOR, B+)$$

Pour ce faire, une quatrième limitation de rapport cyclique DC_C_LIMIT intervient si une estimation de couple C_TA du couple résistant C en fonction de la vitesse de rotation V_ROTOR du rotor, du courant d'excitation I_ROTOR et de la tension d'alimentation B+ est supérieure à un seuil de couple C_TH prédéterminé.

Si l'estimation de couple C_TA, réalisée par une fonction dite "TORQUE ASSIST" (en terminologie anglaise, c'est-à-dire "assistance de couple"), est supérieure au seuil de couple C_TH prédéterminé, le rapport cyclique maximum DC_LIMIT est égal à la quatrième limitation de rapport cyclique DC_C_LIMIT.

Dans ce cas, cette quatrième limitation de rapport cyclique DC_C_LIMIT prévaut sur une valeur de contrôle élaborée par une boucle de régulation de la tension B+.

Si l'estimation de couple C_TA est inférieure au seuil prédéterminé C_TH, il n'y a aucune limitation du rapport cyclique, qui est contrôlé normalement par la boucle de régulation pour maintenir la tension du réseau à la consigne.

La **Figure 6** montre bien l'effet de la mise en oeuvre de cette seconde variante du procédé de contrôle d'un couple résistant C d'un alternateur en cas d'accroissement des charges électriques au ralenti: le couple prélevé présente un palier 12 de niveau égal au seuil de couple C_TH fixé.

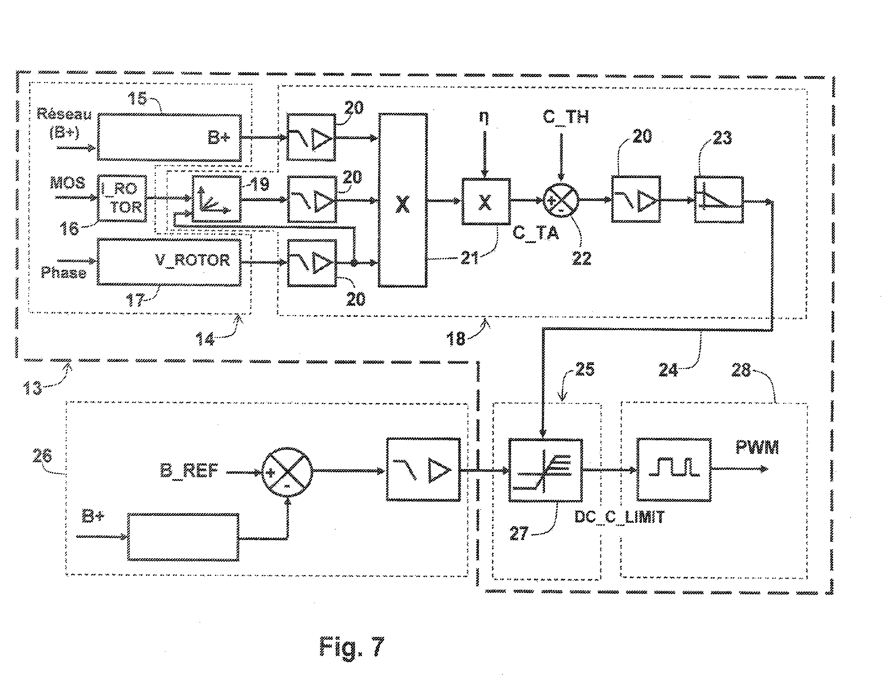

Le procédé selon l'invention étant, dans son principe général, la prise en compte d'au moins deux variables représentatives du fonctionnement de l'alternateur pour déterminer un rapport cyclique maximum DC_LIMIT, le système de contrôle 13 d'un couple résistant C correspondant comprend des moyens nécessaires pour mesurer ces variables, comme le montre bien la **Figure 7**.

Le schéma de principe de la **Figure 7** est plus précisément celui d'un système de contrôle 13 d'un couple résistant C apte à la mise en oeuvre de la seconde variante du procédé selon l'invention.

Ce système de contrôle 13 comprend les trois moyens de mesure 14 des trois variables prises en compte dans cette seconde variante:

- des moyens de mesure de tension d'alimentation 15 mesurant la tension d'alimentation B+ du réseau de bord;
- des moyens de mesure de courant d'excitation 16 mesurant le courant d'excitation I_ROTOR quand l'élément à semi-conducteur de commutation MOS est dans l'état passant;
- des moyens de mesure de vitesse de rotation 17 mesurant la vitesse de rotation V_ROTOR de l'alternateur à partir du courant de phase.

Les résultats de mesure B+, I_ROTOR, V_ROTOR fournis par les moyens de mesure 14 sont traités par un bloc estimateur de couple 18 comprenant plusieurs blocs de traitement:

- une cartographie 19 de l'alternateur (table prédéfinie ou fonction polynomiale);
- des amplificateurs et des filtres 20;
- des multiplieurs 21 combinant les résultats de mesure amplifiés et filtrés pour fournir une estimation de couple C_TA;
- un soustracteur 22 élaborant une erreur de couple, différence entre le seuil de couple C_TH prédéterminé et l'estimation de couple C_TA;
- un adaptateur de longueur de mot binaire 23.

La sortie 24 du bloc estimateur de coule 18 est appliquée à un bloc de commande de limitation d'excitation 25.

Ce bloc de commande de limitation d'excitation 25 limite le rapport cyclique variable élaboré par le régulateur de tension 26 préexistant de l'alternateur à un rapport cyclique maximum DC_C_LIMIT au moyen d'un gabarit de limitation de rapport cyclique 27 quand l'estimation de couple C_TA est supérieure au seuil de couple C_TH.

De la sorte le générateur de signaux 28 pilotant le courant d'excitation fournit des signaux PWM de rapport cyclique variable déterminé par le régulateur de tension 26 de manière à maintenir la tension d'alimentation B+ à la tension de consigne B_REF quand l'estimation de couple C_TA est inférieure au seuil de couple C_TH, et des signaux PWM présentant un rapport cyclique maximum DC_C_LIMIT quand un fort appel de charge sur le réseau électrique de bord entraînerait, s'il n'était contrôlé, un couple prélevé supérieur au seuil de couple C_TH.

Les traitements des résultats de mesure B+, I_ROTOR, V_ROTOR par le bloc estimateur de couple 18 et le bloc de commande de limitation d'excitation 25 peuvent être mis en oeuvre par programme au moyen de routines supplémentaires implémentés avantageusement dans des mémoires de microprocesseurs ou de microcontrôleurs que comprennent les dispositifs de régulation des alternateurs modernes standard. Ces traitements peuvent aussi être implémentés en logique numérique (de type ASIC) ou programmable (FPGA, CPLD).

**Revendications**

1. Procédé de contrôle d'un couple résistant (C) d'un alternateur de véhicule automobile destiné à être accouplé à un moteur thermique d'un véhicule et apte à produire une tension d'alimentation (B+) d'un réseau de bord dudit véhicule, en réponse à un courant d'excitation (I_ROTOR) appliqué à un rotor dudit alternateur, ledit procédé étant du type de ceux consistant à limiter ledit couple résistant (C) en déterminant un rapport cyclique maximum (DC_LIMIT) dudit courant d'excitation (I_ROTOR) en fonction de variables prises parmi un groupe comprenant une vitesse de rotation (V_ROTOR) dudit rotor, une température (T_ROTOR) dudit rotor, ledit courant d'excitation (I_ROTOR), ladite tension d'alimentation (B+), où ledit rapport cyclique maximum (DC_LIMIT) est déterminé en fonction d'au moins ladite vitesse de rotation (V_ROTOR) et ladite température (T_ROTOR), **caractérisé en ce que** ledit rapport cyclique maximum (DC_LIMIT) étant égal à une fonction linéaire de ladite température (T_ROTOR) présentant une pente inversement proportionnelle à ladite vitesse de rotation (V_ROTOR).

2. Procédé de contrôle d'un couple résistant (C) d'un alternateur de véhicule automobile selon la revendication 1, **caractérisé en ce que** ladite température (T_ROTOR) est estimée en fonction d'une mesure de température d'un régulateur de ladite tension (B+), de préférence une température de jonction d'un élément à semi-conducteur de commutation (MOS) dudit courant d'excitation (I_ROTOR).

3. Système de contrôle (13) d'un couple résistant (C) d'un alternateur de véhicule automobile, apte à la mise en oeuvre du procédé selon la revendication 1 ou 2, ledit alternateur étant destiné à être accouplé à un moteur thermique d'un véhicule et produisant une tension d'alimentation (B+) d'un réseau de bord dudit véhicule en réponse à un courant d'excitation (I_ROTOR) circulant dans un rotor dudit alternateur, ledit système (13) étant du type de ceux consistant à limiter ledit couple résistant (C) et comprenant :

  - un générateur de signaux (28) pilotant ledit courant d'excitation (I_ROTOR) et présentant un rapport cyclique variable au plus égal à un rapport cyclique maximum (DC_LIMIT);
  - des moyens de mesure (14) pris parmi un premier groupe comprenant des moyens de mesure de vitesse de rotation (17) dudit rotor, des moyens de mesure de témpérature dudit rotor, des moyens de mesure de courant d'excitation (16), des moyens de mesure de tension d'alimentation (15); et
  - des moyens de détermination (18,25) dudit rapport cyclique maximum (DC_LIMIT) à partir de résultats de mesure fournis par lesdits moyens de mesure (14) ;

  où lesdits moyens de détermination (18,25) déterminent ledit rapport cyclique maximum (DC_LIMIT) en fonction d'au moins ladite vitesse de rotation (V_ROTOR) et ladite température (T_ROTOR), **caractérisé en ce que** ledit rapport cyclique maximum (DC_LIMIT) étant égal à une fonction linéaire de ladite température (T_ROTOR) présentant une pente inversement proportionnelle à ladite vitesse de rotation (V_ROTOR).

4. Système de contrôle (13) d'un couple résistant (C) d'un alternateur de véhicule automobile selon la revendication 3, **caractérisé en ce que** lesdits moyens de détermination (18, 25) comprennent également un bloc estimateur de couple (18) et un bloc de commande de limitation d'excitation (25).

5. Système de contrôle (13) d'un couple résistant (C) d'un alternateur de véhicule automobile selon la revendication 4, caractérisé en ce ledit bloc estimateur de couple (18) comprend au moins un élément de traitement parmi un second groupe comprenant un amplificateur (20), un filtre (20), un multiplieur (21), une cartographie (19), un soustracteur (22), un adaptateur de longueur de mot binaire (23), et en ce que ledit bloc de commande de limitation d'excitation (25) comporte un gabarit de limitation de rapport cyclique (27).

6. Système de contrôle (13) d'un couple résistant (C) d'un alternateur de véhicule automobile selon l'une quelconque des revendications 3 à 5 précédentes, **caractérisé en ce que** lesdits moyens de détermination (18, 25) comprennent en outre une mémorisation comprenant des instructions représentatives du procédé selon la revendication 1 ou 2 précédente.

7. Alternateur de véhicule automobile comprenant un système de contrôle (13) d'un couple résistant (C) selon l'une quelconque des revendications 3 à 6 précédentes.

**Patentansprüche**

1. Verfahren zum Steuern eines Lastmoments (C) eines Kraftfahrzeug-Wechselstromgenerators, der dazu bestimmt ist, mit einer Brennkraftmaschine eines Fahrzeugs gekoppelt zu werden und in Reaktion auf einen Erregungsstrom (I_ROTOR), der an einen Rotor des Wechselstromgenerators angelegt wird, eine Versorgungsspannung (B+) eines Bordnetzes des Fahrzeugs zu erzeugen, wobei das Verfahren vom Typ jener ist, die darin bestehen, das Lastmoment (C) durch Bestimmen eines maximalen Tastverhältnisses (DC_LIMIT) des Erregungsstroms (I_ROTOR) als Funktion von Variablen, die unter der Gruppe gewählt werden, die eine Drehzahl (V_ROTOR) des Rotors, eine Temperatur (T_ROTOR) des Rotors, den Erregungsstrom (I_ROTOR) und die Versorgungsspannung (B+) umfasst, zu begrenzen, wobei das maximale Tastverhältnis (DC_LIMIT) als Funktion wenigstens der Drehzahl (V_ROTOR) und der Temperatur (T_ROTOR) bestimmt wird, **dadurch gekennzeichnet, dass** das maximale Tastverhältnis (DC_LIMIT) gleich einer linearen Funktion der Temperatur (T_ROTOR) ist, die eine Steigung aufweist, die zu der Drehzahl (V_ROTOR) indirekt proportional ist.

2. Verfahren zum Steuern eines Lastmoments (C) eines Kraftfahrzeug-Wechselstromgenerators nach Anspruch 1, **dadurch gekennzeichnet, dass** die Temperatur (T_ROTOR) als Funktion einer Messung der Temperatur eines Reguliers der Spannung (B+), vorzugsweise einer Übergangstemperatur eines Halbleiterelements (MOS) zum Schalten des Erregungsstroms (I_ROTOR), geschätzt wird.

3. System (13) zum Steuern eines Lastmoments (C) eines Kraftfahrzeug-Wechselstromgenerators, das für die Ausführung des Verfahrens nach Anspruch 1 oder 2 geeignet ist, wobei der Wechselstromgenerator dazu bestimmt ist, mit einer Brennkraftmaschine eines Fahrzeugs gekoppelt zu werden und in Reaktion auf einen Erregungsstrom (I_ROTOR), der in einem Rotor des Wechselstromgenerators fließt, eine Versorgungsspannung (B+) eines Bordnetzes des Fahrzeugs zu erzeugen, wobei das System (13) vom Typ jener ist, die darin bestehen, das Lastmoment (C) zu begrenzen, und das Folgendes umfasst:

- einen Generator (28) für Signale, die den Erregungsstrom (I_ROTOR) steuern und ein veränderliches Tastverhältnis aufweisen, das höchstens gleich einem maximalen Tastverhältnis (DC_LIMIT) ist;
- Messmittel (14), die unter einer ersten Gruppe gewählt sind, die Mittel (17) zum Messen der Drehzahl des Rotors, Mittel zum Messen der Temperatur des Rotors, Mittel (16) zum Messen des Erregungsstroms und Mittel (15) zum Messen der Versorgungsspannung umfasst; und
- Mittel (18, 25) zum Bestimmen des maximalen Tastverhältnisses (DC_LIMIT) anhand der Messergebnisse, die von den Messmitteln (14) geliefert werden;

wobei die Bestimmungsmittel (18, 25) das maximale Tastverhältnis (DC_LIMIT) als Funktion wenigstens der Drehzahl (V_ROTOR) und der Temperatur (T_ROTOR) bestimmen, **dadurch gekennzeichnet, dass** das maximale Tastverhältnis (DC_LIMIT) gleich einer linearen Funktion der Temperatur (T_ROTOR) ist, die eine Steigung aufweist, die zu der Drehzahl (V_ROTOR) indirekt proportional ist.

4. System (13) zum Steuern eines Lastmoments (C) eines Kraftfahrzeug-Wechselstromgenerators nach Anspruch 3, **dadurch gekennzeichnet, dass** die Bestimmungsmittel (18, 25) außerdem einen Drehmoment-Schätzblock (18) und einen Erregungsbegrenzungs-Steuerblock (25) umfassen.

5. System (13) zum Steuern eines Lastmoments (C) eines Kraftfahrzeug-Wechselstromgenerators nach Anspruch 4, **dadurch gekennzeichnet, dass** der Drehmoment-Schätzblock (18) wenigstens ein Verarbeitungselement umfasst, das aus einer zweiten Gruppe gewählt ist, die einen Verstärker (20), ein Filter (20), einen Multiplizierer (21), ein Kennfeld (19), einen Subtrahierer (22) und einen Binärwortlängen-Adapter (23) umfasst, und dass der Erregungsbegrenzungs-Steuerblock (25) eine Schablone (27) für die Begrenzung des Tastverhältnisses umfasst.

6. System (13) zum Steuern eines Lastmoments (C) eines Kraftfahrzeug-Wechselstromgenerators nach einem der vorhergehenden Ansprüche 3 bis 5, **dadurch gekennzeichnet, dass** die Bestimmungsmittel (18, 25) außerdem einen Speicher umfassen, der Befehle enthält, die für das Verfahren nach den vorhergehenden Ansprüchen 1 oder 2 repräsentativ ist.

7. Kraftfahrzeug-Wechselstromgenerator, der ein System (13) zum Steuern eines Lastmoments (C) nach einem der vorhergehenden Ansprüche 3 bis 6 umfasst.

**Claims**

1. Method for controlling a resisting torque (C) of a motor vehicle alternator intended to be coupled to a heat engine of a vehicle and suitable for producing a power supply voltage (B+) of a network onboard said vehicle, in response to an excitation current (I_ROTOR) applied to a rotor of said alternator, said method being of the type of those consisting in limiting said resisting torque (C) by determining a maximum duty cycle (DC_LIMIT) of said excitation current (I_ROTOR) as a function of variables taken from a group comprising a speed of rotation (V_ROTOR) of said rotor, a temperature (T_ROTOR) of said rotor, said excitation current (I_ROTOR), said power supply voltage (B+), in which said maximum duty cycle (DC_LIMIT) is determined as a function of at least said speed of rotation (V_ROTOR) and said temperature (T_ROTOR), **characterized in that** said maximum duty cycle (DC_LIMIT) is equal to a linear function of said temperature (T_ROTOR) exhibiting a slope inversely proportional to said speed of rotation (V_ROTOR).

2. Method for controlling a resisting torque (C) of a motor vehicle alternator according to Claim 1, **characterized in that** said temperature (T_ROTOR) is estimated as a function of a measurement of temperature of a regulator of said voltage (B+), preferably a junction temperature of a semiconductor element for switching (MOS) said excitation current (I_ROTOR).

3. System (13) for controlling a resisting torque (C) of a motor vehicle alternator, suitable for implementing the method according to Claim 1 or 2, said alternator being intended to be coupled to a heat engine of a vehicle and producing a power supply voltage (B+) of a network onboard said vehicle in response to an excitation current (I_ROTOR) circulating in a rotor of said alternator, said system (13) being of the type of those consisting in limiting said resisting torque (C) and comprising:

- a signal generator (28) driving said excitation current (I_ROTOR) and exhibiting a variable duty cycle at most equal to a maximum duty cycle (DC_LIMIT);
- measurement means (14) taken from a first group comprising means for measuring the speed of rotation (17) of said rotor, means for measuring the temperature of said rotor, means for measuring the excitation current (16), means for measuring the power supply voltage (15); and
- means for determining (18, 25) said maximum duty cycle (DC_LIMIT) from measurement results supplied by said measurement means (14);

in which said determination means (18, 25) determine said maximum duty cycle (DC_LIMIT) as a function of at least said speed of rotation (V_ROTOR) and said temperature (T_ROTOR), **characterized in that** said maximum duty cycle (DC_LIMIT) is equal to a linear function of said temperature (T_ROTOR) exhibiting a slope inversely proportional to said speed of rotation (V_ROTOR).

4. System (13) for controlling a resisting torque (C) of a motor vehicle alternator according to Claim 3, **characterized in that** said determination means (18, 25) also comprise a torque estimator block (18) and an excitation limiting control block (25).

5. System (13) for controlling a resisting torque (C) of a motor vehicle alternator according to Claim 4, **characterized in that** said torque estimator block (18) comprises at least one processing element out of a second group comprising an amplifier (20), a filter (20), a multiplier (21), a mapping (19), a subtractor (22), a binary word length adapter (23), and **in that** said excitation limiting control block (25) comprises a duty cycle limiting mask (27).

6. System (13) for controlling a resisting torque (C) of a motor vehicle alternator according to any one of the preceding Claims 3 to 5, **characterized in that** said determination means (18, 25) further comprise a storage comprising instructions representative of the method according to the preceding Claim 1 or 2.

7. Motor vehicle alternator comprising a system (13) for controlling a resisting torque (C) according to any one of the preceding Claims 3 to 6.

Fig. 1a

Fig. 1b

Fig. 2

Fig. 3

**FIG. 4**

**FIG. 5**

FIG. 6

Fig. 7

**EP 2 719 070 B1**

## RÉFÉRENCES CITÉES DANS LA DESCRIPTION

**Documents brevets cités dans la description**

- EP 2259421 A
- DE 102006019625 A1
- DE 102006003425 A1